# EUROPÄISCHE PATENTSCHRIFT

(11) **EP 4 334 608 B1**
(45) Veröffentlichungstag und Bekanntmachung des Hinweises auf die Patenterteilung: **23.07.2025**
(21) Anmeldenummer: 22777180.5
(22) Anmeldetag: 25.04.2022
(51) Int. Cl.: F16J 3/02, F16K 7/12, F16K 37/00

(54) **VENTILMEMBRANE MIT TRANSPONDER UND HERSTELLUNGSVERFAHREN**
VALVE DIAPHRAGM WITH TRANSPONDER, AND METHOD OF PRODUCTION
MEMBRANES DE VALVE À TRANSPONDEUR ET PROCÉDÉ DE FABRICATION

(30) Priorität: 05.05.2021 DE 102021111603
(43) Veröffentlichungstag der Anmeldung: 13.03.2024
(73) Patentinhaber: GEMÜ Gebr. Müller Apparatebau GmbH & Co. Kommanditgesellschaft, 74653 Ingelfingen (DE)
(72) Erfinder: KLEMT, Michael, 74629 Pfedelbach (DE); ESSLINGER, Thomas, 74629 Pfedelbach (DE)
(74) Vertreter: DREISS Patentanwälte PartG mbB
(86) Internationale Anmeldenummer: PCT/EP2022/060908
(87) Internationale Veröffentlichungsnummer: WO 2022/233627

(56) Entgegenhaltungen:
- EP-B1- 2 024 764
- EP-B1- 2 024 764
- DE-U1- 202018 105 892
- DE-U1- 202018 105 892
- FR-A1- 2 844 813
- US-A1- 2002 060 629
- US-A1- 2016 162 771
- US-A1- 2019 346 063
- US-A1- 2019 346 063

## Beschreibung

Die Erfindung betrifft Ventilmembrane und deren Herstellungsverfahren.

Ventilmembrane sind allgemein bekannt und dienen zum Verschließen und Öffnen von Prozessfluidleitungen in einem Ventilkörper.

Zu Identifikationszwecken ist es bekannt, einen RFID-Chip im Sinne eines Transponders mit der Membran zu verbinden.

US 2019/ 346063 A1 offenbart eine Ventilmembran umfassend einen Flanschabschnitt und einen Membranabschnitt. Es wird vorgeschlagen, dass sie einen in einem Gehäuse aufgenommenen Datenträger umfasst und dass das Gehäuse an einem Rand des Flanschabschnitts so angeordnet ist, dass es, von außen auf den Rand gesehen, wenigstens zum Teil sichtbar ist.

DE 20 2018 105 892 U1 offenbart eine Vorrichtung mit einem Sackloch zum Einbringen eines Transponders, wobei der Transponder von einer Hülle aus Elastomer, Silikon oder Kunststoff umgeben ist, und wobei die Hülle derart ausgebildet ist, dass sie geeignet ist, den Transponder im Sackloch zu fixieren.

Die Probleme des Stands der Technik werden durch Ventilmembrane gemäß Anspruch 1 sowie durch ein Herstellverfahren eines abhängigen Anspruchs gelöst. Vorteilhafte Weiterbildungen finden sich in den Unteransprüchen, der nachfolgenden Beschreibung und in der Zeichnung.

Gemäß einem ersten Aspekt der Beschreibung wird eine Ventilmembran bereitgestellt, die umfasst: einen schmalseitig angeordneten Randbereich, insbesondere eine über einen Funktionsbereich der Ventilmembran hinausragende Lasche, wobei eine Ausnehmung des Randbereichs ausgehend von einer Öffnung der Ausnehmung eine Durchmesservergrößerung umfasst; und
einen einen Transponder umfassenden Kunststoffkörper, dessen Befestigungsabschnitt durch die Öffnung hindurchragt, wobei der Befestigungsabschnitt durch eine in der Durchmesservergrößerung der Ausnehmung erfolgte Umformung, insbesondere durch eine Heißverstemmung, wenigstens eines Bereichs des Befestigungsabschnitts die Durchmesservergrößerung zumindest teilweise ausfüllt.

Insbesondere bei dünnwandigen Ventilmembranen oder bei Ventilmembranen, deren Material wie bspw. PTFE und dessen Materialeigenschaften Befestigungsmöglichkeiten einschränken, wird es erst möglich, einen Transponder an der Ventilmembran anzubringen.

Ein vorteilhaftes Beispiel zeichnet sich dadurch aus, dass die Ausnehmung ein insbesondere lotrecht zu einer Membranebene verlaufender Durchgang ist und eine weitere Öffnung aufweist, und wobei der Kunststoffkörper nicht wesentlich über die weitere Öffnung hinausragt oder der Kunststoffkörper innerhalb der weiteren Öffnung abschließt. Vorteilhaft kann so beispielsweise auf der Seite, auf der die weitere Öffnung liegt, eine weitere Membran wie beispielsweise eine EPDM-Membran angeordnet werden.

Ein vorteilhaftes Beispiel zeichnet sich dadurch aus, dass die Ausnehmung ein insbesondere lotrecht zur Membranebene verlaufender Durchgang ist und eine weitere Öffnung aufweist, und wobei eine die weitere Öffnung umgebende Oberfläche des Randbereichs der Ventilmembran und eine Oberfläche des Kunststoffkörpers im Wesentlichen bündig sind.

Neben einer verbesserten Anordnungsmöglichkeit verbessert sich durch die bündige Ausgestaltung die Abreinigbarkeit.

Folglich ist die Ventilmembran führ hohe Hygieneanforderungen geeignet.

Ein vorteilhaftes Beispiel zeichnet sich dadurch aus, dass ein außerhalb der Ausnehmung angeordneter Kopf des Kunststoffkörpers einen der Durchmesservergrößerung zugewandten Anlageabschnitt umfasst, der an einer Anlagefläche des Randbereichs anliegt.

Der auf einer Seite der Ventilmembran abstehende Kopf ermöglicht den Formschluss zur Festlegung des Kunststoffkörpers zu der Ventilmembran.

Ein vorteilhaftes Beispiel zeichnet sich dadurch aus, dass der Anlageabschnitt des Kopfes und die Durchmesservergrößerung zumindest teilweise ausfüllende Bereich des Befestigungsabschnitts den Kunststoffkörper zu dem Randbereich formschlüssig festlegt.

Der Formschluss ist insbesondere bei Materialien der Ventilmembran wie beispielsweise PTFE vorteilhaft. Ein vorteilhaftes Beispiel zeichnet sich dadurch aus, dass der Kopf den Transponder umfasst, insbesondere einbettet.

Vorteilhaft ist der außerhalb der Ausnehmung angeordnete Transponder einfacher auslesbar. Die funktionale Entkopplung des Haltens des Transponders von der Befestigung ermöglicht konstruktive Freiheitsgrade. Insbesondere die Anordnung bei dünnwandigen Ventilmembranen gestaltet sich einfacher.

Ein vorteilhaftes Beispiel zeichnet sich dadurch aus, dass die Anlagefläche des Randbereichs gegenüber einer umgebenden Oberfläche des Randbereichs zurückspringt.

Vorteilhaft kann so die Außenkontur des Kopfes aufgenommen werden.

Ein vorteilhaftes Beispiel zeichnet sich dadurch aus, dass eine schmalseitige Außenkontur des Kopfes zumindest in proximaler Richtung einer gedachten Zylindermantelfläche folgt.

Vorteilhaft ergeben sich fertigungstechnische Vorteile, da die Dreh-Ausrichtung des Kopfes während der Herstellung und der Verbindung mit dem Randbereich nicht ausschlaggebend ist.

Ein vorteilhaftes Beispiel zeichnet sich dadurch aus, dass ein Hauptkörper der Ventilmembran aus einem Polyolefin, wie beispielsweise Polytetrafluorethylen, oder Polyvinylidenfluorid gefertigt ist.

Ein vorteilhaftes Beispiel zeichnet sich dadurch aus, dass der Kunststoffkörper, insbesondere dessen Hauptkörper, aus Polyamid, Polybutylenterephthalat, Polycarbonat, Polyetherketon, Polyoxymethylene oder Polypropylen gefertigt ist.

Ein zweiter Aspekt der Beschreibung betrifft ein Verfahren zum Herstellen der Ventilmembran gemäß dem ersten Aspekt. Das Verfahren umfasst: Herstellen des Hauptkörpers der Ventilmembran, wobei die Durchmesservergrößerung als Sackloch mit zum Sacklochboden wenigstens abschnittsweise abnehmendem Innendurchmesser in dem Hauptkörper ausgeführt ist; Einbringen, insbesondere Stanzen, eines Durchgangs im Bereich der Durchmesservergrößerung zur Bildung der Ausnehmung; Anordnen des eines Rohling-Befestigungsabschnitts eines Kunststoffkörper-Rohlings im Bereich der Durchmesservergrößerung, wobei der Befestigungsabschnitt durch die Öffnung geführt wird; und Umformen, insbesondere Heißverstemmen, des Rohling-Befestigungsabschnitts zur Herstellung des wenigstens einen Bereichs des Befestigungsabschnitts.

Ein dritter Aspekt der Beschreibung betrifft eine Ventilmembran. Diese umfasst: einen schmalseitig angeordneten Randbereich, insbesondere eine über einen Funktionsbereich der Ventilmembran hinausragende Lasche; und einen Kunststoffkörper, der einen Kopf mit einem darin angeordneten Transponder umfasst, wobei ein innerhalb des Randbereichs angeordneter Befestigungsabschnitt von dem Kopf abragt, und wobei der Befestigungsabschnitt umfasst: zumindest zwei erste auf gegenüberliegenden Seiten einer Mittenlängsachse des Kunststoffkörpers angeordnete und sich in distaler Richtung verjüngende Formschlussabschnitte; und zumindest zwei zweite auf gegenüberliegenden Seiten der Mittenlängsachse des Kunststoffkörpers angeordnete und in proximaler Richtung abragende Formschlussabschnitte.

Damit werden unterschiedlich ausgeformte Formschlussabschnitte miteinander kombiniert, die die Auszugfestigkeit des Kunststoffkörpers in Kombination miteinander verbessern. Die ersten Formschlussabschnitte sorgen für das Öffnen einer Kavität beim Einbringen. Die zweiten Formschlussabschnitte erhöhten die Auszugsfestigkeit.

Ein vorteilhaftes Beispiel zeichnet sich dadurch aus, dass in distaler Richtung orientierte Oberflächen der ersten Formschlussabschnitte jeweils einen kleineren Winkel, insbesondere einen um wenigstens 10° kleineren Winkel, insbesondere einen um wenigstens 15° kleineren Winkel, mit der Mittenlängsachse einschließen als in distaler Richtung orientierte Oberflächen der zweiten Formschlussabschnitte mit der Mittenlängsachse.

Vorteilhaft verringert sich der Eindringwiderstand im Bereich der ersten Formschlussabschnitte. Durch die zweiten Formschlussabschnitte wird so der Auszugwiderstand erhöht.

Ein vorteilhaftes Beispiel zeichnet sich dadurch aus, dass eine Oberfläche des distalen Endes des Befestigungsabschnitts im Übergang zu dem jeweiligen ersten Formschlussabschnitt eine Kante bildet, und/oder wobei die Oberfläche des distalen Endes des Befestigungsabschnitts im Übergang zu dem jeweiligen zweiten Formschlussabschnitt keine Kante bildet.

Die Kanten verbessern ein Öffnen des Elastomerwerkstoffs zum Herstellen einer Kavität, die das Eindringen des Kunststoffkörpers ermöglicht.

Ein vorteilhaftes Beispiel zeichnet sich dadurch aus, dass sich an eine in distaler Richtung orientierte Oberfläche des jeweiligen ersten Formschlussabschnitts eine in Richtung des Kopfes orientierte Oberfläche anschließt, und wobei sich an eine in distaler Richtung orientierte Oberfläche des jeweiligen zweiten Formschlussabschnitts eine in lateraler Richtung orientierte Oberfläche anschließt.

Die in Richtung des Kopfs orientierten Oberflächen stellen die Auszugsgegenkraft bereit. Die in laterale Richtung orientierte Oberfläche ermöglicht zum einen das Hineingleiten des Kunststoffkörpers in das Elastomer. Zum anderen wird eine Kante zwischen der lateralen Oberfläche und der proximalen, in Richtung Kopf orientierten Oberfläche bereitgestellt.

Ein vorteilhaftes Beispiel zeichnet sich dadurch aus, dass ein Hauptkörper der Ventilmembran, der den Randbereich umfasst, aus einem Elastomer wie beispielsweise Ethylen-Propylen-Dien-Kautschuk gefertigt ist.

In der Zeichnung zeigen:
- Figur 1: eine mehrteilige Membran in schematischer perspektivischer Sicht;
- Figur 2: einen Randbereich einer Membran mit einem Durchgang in einem schematischen Schnitt aus Figur 1;
- Figur 3: einen im Durchgang angeordneten Kunststoffkörper in einem schematischen Schnitt aus Figur 1;
- Figur 4: ein schematisches Ablaufdiagramm;
- Figur 5: einen weiteren Kunststoffkörper in schematischer perspektivischer Sicht;
- Figur 6: den weiteren Kunststoffkörper in einer Seitenansicht; und
- Figur 7: den weiteren Kunststoffkörper in einem schematischen Schnitt.

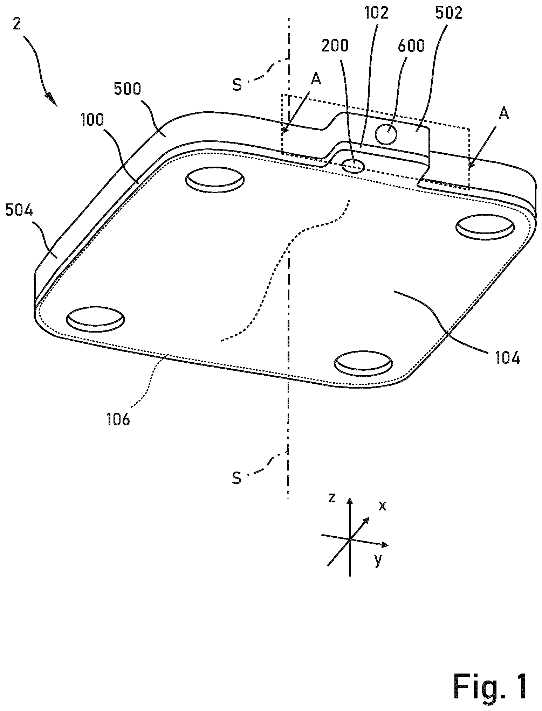

Figur 1 zeigt in schematischer perspektivischer Ansicht eine mehrteilige Membran 2 umfassend eine nassseitige Membran 100 und eine trockenseitig angeordnete Membran 500. Die zweiteilige Membran 2 umfasst also die erste, einem Ventilkörper eines Membranventils zugewandte Membran 100 und die zweite, einem Antrieb des Membranventils zugewandte Membran 500. Die zweiteilige Membran 2 wird in einem lateralen Bereich, dem Klemmbereich, zwischen dem Ventilkörper und dem Antrieb verklemmt. Die erste Membran 100 ist auch als Membranschild bezeichenbar. Die erste Membran 100 umfasst beispielsweise ein synthetisches Fluoropolymer wie beispielsweise Polytetrafluorethylen. Die erste Membran 100 umfasst einen Dichtsteg, wobei der Dichtsteg der ersten Membran 100 zum Schließen des Fluidkanals entlang einer Stellachse S bewegt wird und auf den Ventilsitz drückt. Selbstverständlich kann der Dichtsteg in anderen Ausführungsformen auch entfallen. Vier äußere Durchgangsöffnungen dienen zur Durchführung von Befestigungsvorrichtungen wie beispielsweise Stehbolzen zur Verklemmung der Membran 2, die in anderen Ausführungsformen aber auch entfallen können.

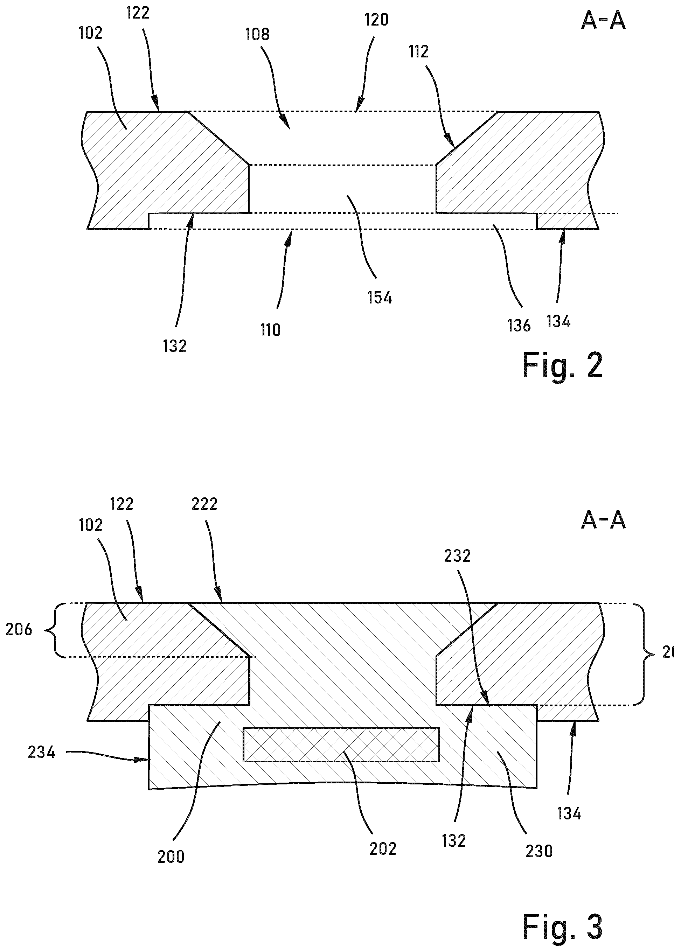

Die folgende Beschreibung betrifft die Membran 100 und bezieht sich auf die Figuren 2 bis 4.

Die Ventilmembran 100 umfasst einen schmalseitig angeordneten Randbereich 102 eines Hauptkörpers 104, insbesondere eine über einen Funktionsbereich 106 der Ventilmembran 100 hinausragende Lasche. Der Funktionsbereich 106 umfasst beispielsweise einen Walkbereich, der ein Schließen und Öffnen des Membranventils ermöglicht, und einen Klemmbereich zum lateralen Verklemmen der Membran. Eine Ausnehmung 108 des Randbereichs 102 ausgehend von einer Öffnung 110 der Ausnehmung 108 umfasst eine Durchmesservergrößerung 112.

Ein im Wesentlichen einstückiger Kunststoffkörper 200 umfasst einen Befestigungsabschnitt 204, der in verbautem Zustand durch die Öffnung 110 hindurchragt. In einem Kopf 230 des Kunststoffkörpers 200 ist ein Transponder 202 angeordnet.

Der Befestigungsabschnitt 204 ist durch eine in der Durchmesservergrößerung 112 der Ausnehmung 108 erfolgte Umformung, insbesondere durch eine Heißverstemmung, gebildet. Hierzu wird wenigstens ein Bereich 206 des Befestigungsabschnitts 204 umgeformt. Die Durchmesservergrößerung 112 ist durch den Befestigungsabschnitt 204 bzw. dessen Bereich 206 zumindest teilweise ausgefüllt.

Auf dem Transponder 202 ist beispielsweise eine elektronische Kennung der Ventilmembran 100 abgespeichert, die über ein Lesegerät kontaktlos auslesbar ist.

Die Ausnehmung 108 ist ein insbesondere lotrecht zu einer Membranebene xy verlaufender Durchgang und weist eine weitere Öffnung 120 auf. Der Kunststoffkörper 200 ragt nicht wesentlich über die weitere Öffnung 120 hinaus oder der Kunststoffkörper 200 schließt innerhalb der weiteren Öffnung 120 ab. In einem Beispiel sind die die weitere Öffnung 120 umgebende Oberfläche 122 des Randbereichs 102 der Ventilmembran 100 und eine Oberfläche 222 des Kunststoffkörpers 200 im Wesentlichen bündig.

Der außerhalb der Ausnehmung 108 angeordnete Kopf 230 des Kunststoffkörpers 200 umfasst einen der Durchmesservergrößerung 112 zugewandten Anlageabschnitt 232, der an einer Anlagefläche 132 des Randbereichs 132 anliegt. Der Kopf 230 umfasst also den Transponder 202 und bettet diesen in das Kunststoffmaterial ein.

Der Anlageabschnitt 232 des Kopfes 230 und der die Durchmesservergrößerung 112 zumindest teilweise ausfüllende Bereich 206 des Befestigungsabschnitts 204 legen den Kunststoffkörper 200 formschlüssig zu dem Randbereich 102 fest.

Die kreisringförmige Anlagefläche 132 springt gegenüber einer den Kopf 230 umgebenden Oberfläche 134 des Randbereichs 102 zurück und bildet damit einen Aufnahmebereich 136 für einen proximalen Teil des Kopfes 230. Durch die rückspringende Anlagefläche 132 wird der Kopf 230 formschlüssig in der bzw. parallel zu der Membranebene xy festgelegt. Ein Verbindungsdurchgang 154 verbindet den Aufnahmebereich 136 und die Durchmesservergrößerung 112.

Eine schmalseitige Außenkontur 234 des Kopfes 230 folgt zumindest in proximaler Richtung einer gedachten Zylindermantelfläche folgt.

Der Hauptkörper 104 der Ventilmembran 100, der beispielsweise auch als Schild oder Membranschild bezeichenbar ist, ist aus einem Polytetrafluorethylen oder Polyvinylidenfluorid gefertigt. Der Kunststoffkörper 200, insbesondere dessen Hauptkörper, ist aus Polyamid, Polybutylenterephthalat, Polycarbonat, Polyetherketon, Polyoxymethylene oder Polypropylen gefertigt.

Alternativ zu dem gezeigten Beispiel der Figuren 2 bis 4 verläuft die Ausnehmung beispielsweise parallel zur Membranebene und die Öffnung befindet sich an einer Schmalseite. In diesem nicht gezeigten Beispiel ist der Kopf 230 des Kunststoffkörpers 200 an der Schmalseite der Membran 100 bzw. des Randbereichs 102 angeordnet. Die Ausnehmung weist also keine der Öffnung 110 gegenüberliegende Öffnung auf und ist beispielsweise sacklochartig ausgebildet. In diesem Beispiel liegt die Längsachse der Ausnehmung beispielsweise parallel zu der Membranebene xy.

Zum Herstellen der Ventilmembran 100 werden folgende Schritte durchgeführt. Ein Herstellen 402 des Hauptkörpers 104 der Ventilmembran 100 umfasst, dass die Durchmesservergrößerung 112 als Sackloch mit zum Sacklochboden wenigstens abschnittsweise abnehmendem Innendurchmesser in dem Hauptkörper 104 ausgeführt wird. Ein Einbringen 404, insbesondere ein Stanzen, des Durchgangs 154 wird im Bereich der Durchmesservergrößerung 112 zur Bildung der Ausnehmung 108 durchgeführt. Ein Anordnen 406 eines Rohling-Befestigungsabschnitts 690 eines Kunststoffkörper-Rohlings 600 im Bereich der Durchmesservergrößerung 112 umfasst, dass der Befestigungsabschnitt 602 durch die Öffnung 110 geführt wird. Ein Umformen 408, insbesondere ein Heißverstemmen, des Rohling-Befestigungsabschnitts 602 wird durchgeführt, um den wenigstens einen Bereich 206 des Befestigungsabschnitts 204 in der Durchmesservergrößerung 112 festzulegen.

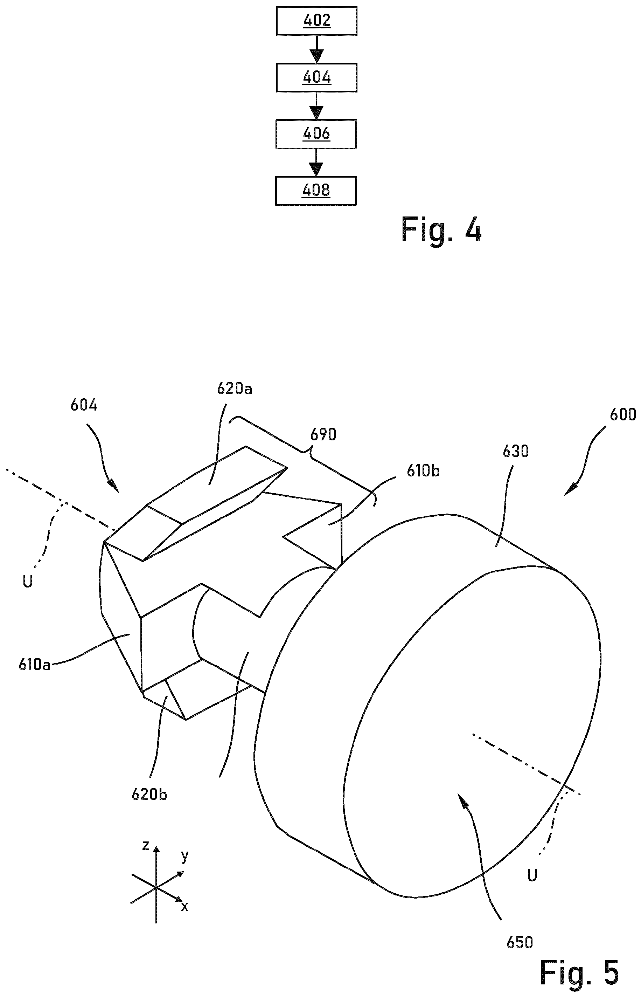

Im Schritt 404 wird der Kunststoffkörper 600 aus Figur 5 verwendet. Die Durchmesservergrößerung 112 ist volumenmäßig so auf den Rohling-Befestigungsabschnitt 690 aus Figur 5 abgestimmt, so dass nach dem Heißverstemmen kein Material über die Öffnung 120 aus Figur 2 hinausragt.

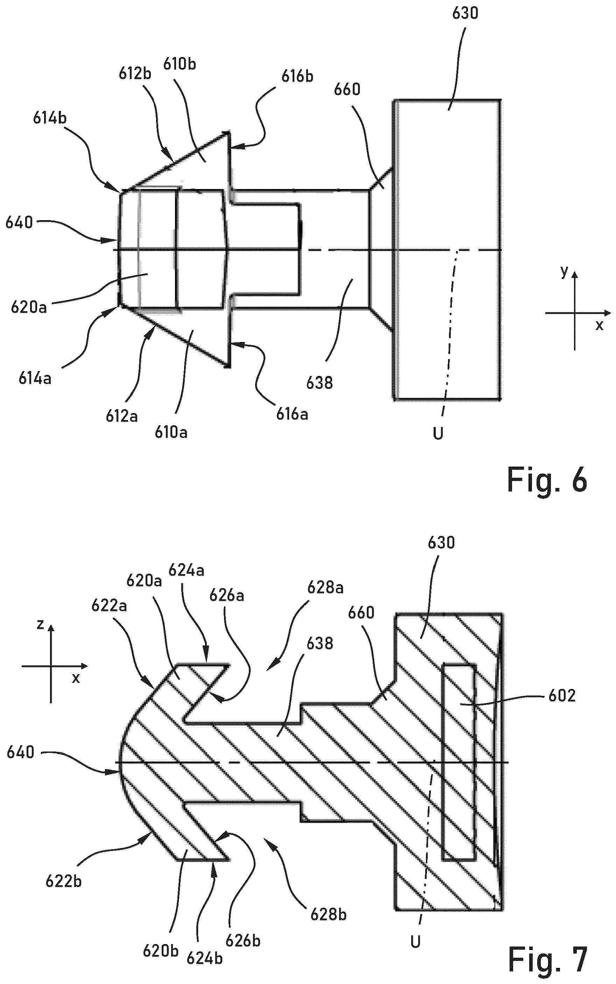

Die folgende Beschreibung betrifft die Membran 500 aus Figur 1 und bezieht sich auf die Figuren 1 sowie 5 bis 7.

Die Ventilmembran 500 umfasst einen schmalseitig angeordneten Randbereich 502 eines Hauptkörpers 504, insbesondere eine über einen Funktionsbereich der Ventilmembran 500 hinausragende Lasche. Ein Kunststoffkörper 600 umfasst einen Kopf 630 mit einem darin angeordneten Transponder 602. Ein innerhalb des Randbereichs 502 angeordneter Befestigungsabschnitt 604 ragt von dem Kopf 630 ab. Eine distale Oberfläche 650 des Kopfes 630 ist konkav gewölbt.

In einem nicht gezeigten Beispiel sind die Laschen gemäß der Randbereiche 102, 502 um einen Winkel von beispielsweise 180° zueinander versetzt angeordnet.

Der Befestigungsabschnitt 604 umfasst zumindest zwei erste auf gegenüberliegenden Seiten einer Mittenlängsachse U des Kunststoffkörpers 600 angeordnete und sich in distaler Richtung verjüngende Formschlussabschnitte 610a, 610b. Des Weiteren umfasst der Befestigungsabschnitt zumindest zwei zweite auf gegenüberliegenden Seiten der Mittenlängsachse U des Kunststoffkörpers 600 angeordnete und in proximaler Richtung abragende Formschlussabschnitte 620a, 620b.

Eine Oberfläche 612a, 612b des jeweiligen ersten Formschlussabschnitts 610a, 610b schließt mit der Mittenlängsachse U einen Winkel in einem Bereich zwischen 20° und 40°, insbesondere zwischen 25° und 35°. ein.

Die zweiten Formschlussabschnitte 620a, 620b ragen schräg von dem distalen Ende des Befestigungsabschnitts 604 ab und deren jeweilige in distaler Richtung angeordnete Oberfläche 622a, 622b schließt mit der Mittenlängsachse einen Winkel in einem Bereich zwischen 40° und 60°, insbesondere zwischen 45° und 55° ein.

Die in distaler Richtung orientierte Oberflächen 612a, 612b der ersten Formschlussabschnitte 610a, 610b schließen jeweils einen kleineren Winkel, insbesondere einen um wenigstens 10° kleineren Winkel, insbesondere einen um wenigstens 15° kleineren Winkel, mit der Mittenlängsachse U ein als in distaler Richtung orientierte Oberflächen 622a, 622b der zweiten Formschlussabschnitte 620a, 620b mit der Mittenlängsachse U.

Eine Oberfläche 640 des distalen Endes des Befestigungsabschnitts 604 im Übergang zu dem jeweiligen ersten Formschlussabschnitt 610a, 610b bildet eine Kante 614a, 614b. In einem xy-Schnitt verläuft die distale Oberfläche 640 im Wesentlichen oder nahezu lotrecht zur Mittenlängsachse U und weist lediglich eine kleine konvexe Wölbung auf.

Die Oberfläche 640 des distalen Endes des Befestigungsabschnitts 604 bildet im Übergang zu dem jeweiligen zweiten Formschlussabschnitt 620a, 620b keine Kante, sondern geht vielmehr homogen über. In einer xz-Ebene ist die distale Oberfläche 640 konvex gewölbt.

An eine in distaler Richtung orientierte Oberfläche 612a, 612b des jeweiligen ersten Formschlussabschnitts 610a, 610b schließt sich über eine Kante eine in Richtung des Kopfes 630 orientierte Oberfläche 616a, 616b an. An eine in distaler Richtung orientierte Oberfläche 622a, 622b des jeweiligen zweiten Formschlussabschnitts 620a, 620b schließt sich über eine Kante eine in lateraler Richtung orientierte Oberfläche 624a, 624b an. An die laterale Oberfläche 624a, 624b schließt sich über eine Kante eine jeweilige in Richtung des Kopfes 630 orientierte Oberfläche 626a, 626b an, welche beispielsweise parallel zu den gegenüberliegenden Oberfläche 622a, 622b verläuft und gemeinsam mit einem Stegabschnitt 638 des Befestigungsabschnitts einen Raum freigibt, in den Elastomermaterial des Randbereichs eindringen kann.

Ein kegelstumpfförmiger Abschnitt 660 verjüngt sich in proximaler Richtung und verbindet den Stegabschnitt 638 und den zylinderförmigen Kopf 630. Der Abschnitt 660 verbessert die Verbindung des Kopfes zu dem Befestigungsabschnitt.

Ein Hauptkörper 504 der Ventilmembran 500, der den Randbereich umfasst, ist aus einem Elastomer wie beispielsweise Ethylen-Propylen-Dien-Kautschuk gefertigt.

## Patentansprüche

1. Eine Ventilmembran (100) umfassend:
einen schmalseitig angeordneten Randbereich (102), wobei eine Ausnehmung (108) des Randbereichs (102) ausgehend von einer Öffnung (110) der Ausnehmung (108) eine Durchmesservergrößerung (112) umfasst; und einen Transponder (202) umfassenden Kunststoffkörper (200), dessen Befestigungsabschnitt (204) durch die Öffnung (110) hindurchragt, **dadurch gekennzeichnet, dass** der Befestigungsabschnitt (204) durch eine in der Durchmesservergrößerung (112) der Ausnehmung (108) erfolgte Umformung wenigstens eines Bereichs (206) des Befestigungsabschnitts (204) die Durchmesservergrößerung (112) zumindest teilweise ausfüllt.

2. Die Ventilmembran (100) gemäß dem Anspruch 1, wobei die Ausnehmung (108) ein insbesondere lotrecht zu einer Membranebene (xy) verlaufender Durchgang ist und eine weitere Öffnung (120) aufweist, und wobei der Kunststoffkörper (200) nicht wesentlich über die weitere Öffnung (120) hinausragt oder der Kunststoffkörper (200) innerhalb der weiteren Öffnung (120) abschließt.

3. Die Ventilmembran (100) gemäß einem der vorigen Ansprüche, wobei die Ausnehmung (108) ein insbesondere lotrecht zur Membranebene (xy) verlaufender Durchgang ist und eine weitere Öffnung (120) aufweist, und wobei eine die weitere Öffnung (120) umgebende Oberfläche (122) des Randbereichs (102) der Ventilmembran (100) und eine Oberfläche (222) des Kunststoffkörpers (200) im Wesentlichen bündig sind.

4. Die Ventilmembran (100) gemäß einem der vorigen Ansprüche, wobei ein außerhalb der Ausnehmung (108) angeordneter Kopf (230) des Kunststoffkörpers (200) einen der Durchmesservergrößerung (112) zugewandten Anlageabschnitt (232) umfasst, der an einer Anlagefläche (132) des Randbereichs (132) anliegt.

5. Die Ventilmembran (100) gemäß dem vorigen Anspruch, wobei der Anlageabschnitt (232) des Kopfes (230) und die Durchmesservergrößerung (112) zumindest teilweise ausfüllende Bereich (206) des Befestigungsabschnitts (204) den Kunststoffkörper (200) zu dem Randbereich (102) formschlüssig festlegt.

6. Die Ventilmembran (100) gemäß Anspruch 4 oder 5, wobei der Kopf (230) den Transponder (202) umfasst, insbesondere einbettet.

7. Die Ventilmembran (100) gemäß einem der Ansprüche 4 bis 6, wobei die Anlagefläche (132) des Randbereichs (132) gegenüber einer umgebenden Oberfläche (134) des Randbereichs (102) zurückspringt.

8. Die Ventilmembran (100) gemäß einem der vorigen Ansprüche, wobei eine schmalseitige Außenkontur (234) des Kopfes (230) zumindest in proximaler Richtung und zumindest abschnittsweise einer gedachten Zylindermantelfläche folgt.

9. Die Ventilmembran (100) gemäß einem der vorigen Ansprüche, wobei ein Hauptkörper (104) der Ventilmembran (100) aus einem Polytetrafluorethylen oder Polyvinylidenfluorid gefertigt ist.

10. Die Ventilmembran (100) gemäß einem der vorigen Ansprüche, wobei der Kunststoffkörper (200), insbesondere dessen Hauptkörper, aus Polyamid, Polybutylenterephthalat, Polycarbonat, Polyetherketon, Polyoxymethylene oder Polypropylen gefertigt ist.

11. Die Ventilmembran (10) gemäß einem der vorigen Ansprüche, wobei der schmalseitig angeordnete Randbereich (102) eine über einen Funktionsbereich (106) der Ventilmembran (100) hinausragende Lasche ist.

12. Die Ventilmembran (100) gemäß einem der vorigen Ansprüche, wobei der Befestigungsabschnitt (204) durch eine in der Durchmesservergrößerung (112) der Ausnehmung (108) erfolgte Heißverstemmung des wenigstens einen Bereichs (206) des Befestigungsabschnitts (204) die Durchmesservergrößerung (112) zumindest teilweise ausfüllt.

13. Ein Verfahren zum Herstellen der Ventilmembran (100) gemäß einem der vorigen Ansprüche, wobei das Verfahren umfasst:
Herstellen (402) des Hauptkörpers (104) der Ventilmembran (100), wobei die Durchmesservergrößerung (112) als Sackloch mit zum Sacklochboden wenigstens abschnittsweise abnehmendem Innendurchmesser in dem Hauptkörper (104) ausgeführt ist;
Einbringen (404), insbesondere Stanzen, eines Durchgangs (154) im Bereich der Durchmesservergrößerung (112) zur Bildung der Ausnehmung (108);
Anordnen (406) des eines Rohling-Befestigungsabschnitts (690) eines Kunststoffkörper-Rohlings (600) im Bereich der Durchmesservergrößerung (112), wobei der Befestigungsabschnitt (602) durch die Öffnung (110) geführt wird; und
Umformen (408), insbesondere Heißverstemmen, des Rohling-Befestigungsabschnitts (602) zur Herstellung des wenigstens einen Bereichs (206) des Befestigungsabschnitts (204) in der Durchmesservergrößerung (112).

## Claims

1. Valve diaphragm (100) comprising:
an edge region (102) arranged on a narrow side, wherein a cutout (108) in the edge region (102) has a diameter enlargement (112) starting from an opening (110) of the cutout (108); and
a plastics body (200) which comprises a transponder (202), the fastening portion (204) of which plastics body protrudes through the opening (110), **characterized in that**, the fastening portion (204) at least partially fills the diameter enlargement (112) by at least one region (206) of the fastening portion (204) having been shaped in the diameter enlargement (112) of the cutout (108).

2. Valve diaphragm (100) according to claim 1, wherein the cutout (108) is a passage running in particular perpendicularly to a diaphragm plane (xy) and has a further opening (120), and wherein the plastics body (200) does not protrude substantially beyond the further opening (120) or the plastics body (200) terminates within the further opening (120).

3. Valve diaphragm (100) according to any of the preceding claims, wherein the cutout (108) is a passage running in particular perpendicularly to the diaphragm plane (xy) and has a further opening (120), and wherein a surface (122) of the edge region (102) of the valve diaphragm (100), which surface surrounds the further opening (120), and a surface (222) of the plastics body (200) are substantially flush.

4. Valve diaphragm (100) according to any of the preceding claims, wherein a head (230) of the plastics body (200), which head is arranged outside the recess (108), comprises an abutment portion (232), facing the diameter enlargement (112), which abuts against an abutment surface (132) of the edge region (132).

5. Valve diaphragm (100) according to the preceding claim, wherein the abutment portion (232) of the head (230) and the region (206) of the fastening portion (204), which region at least partially fills the diameter enlargement (112), interlockingly secure the plastics body (200) to the edge region (102).

6. Valve diaphragm (100) according to claim 4 or 5,
wherein the head (230) comprises, in particular embeds, the transponder (202).

7. Valve diaphragm (100) according to any of claims 4 to 6, wherein the abutment surface (132) of the edge region (132) is set back with respect to a surrounding surface (134) of the edge region (102).

8. Valve diaphragm (100) according to any of the preceding claims, wherein a narrow-side outer contour (234) of the head (230) follows an imaginary cylinder surface at least in the proximal direction and at least in portions.

9. Valve diaphragm (100) according to any of the preceding claims, wherein a main body (104) of the valve diaphragm (100) is made of a polytetrafluoroethylene or polyvinylidene fluoride.

10. Valve diaphragm (100) according to any of the preceding claims, wherein the plastics body (200), in particular the main body thereof, is made of polyamide, polybutylene terephthalate, polycarbonate, polyether ketone, polyoxymethylene or polypropylene.

11. Valve diaphragm (10) according to any of the preceding claims, wherein the edge region (102) arranged on the narrow side is a tab projecting beyond a functional region (106) of the valve diaphragm (100).

12. Valve diaphragm (100) according to any of the preceding claims, wherein the fastening portion (204) at least partially fills the diameter enlargement (112) by the at least one region (206) of the fastening portion (204) having been hot caulked in the diameter enlargement (112) of the cutout (108).

13. Method for producing the valve diaphragm (100) according to any of the preceding claims, wherein the method comprises:
producing (402) the main body (104) of the valve diaphragm (100), wherein the diameter enlargement (112) is implemented as a blind hole which has an inner diameter which decreases at least in portions towards the bottom of the blind hole, in the main body (104);
forming (404), in particular punching, a passage (154) in the region of the diameter enlargement (112) to form the cutout (108);
arranging (406) a blank fastening portion (690) of a plastics body blank (600) in the region of the diameter enlargement (112), wherein the fastening portion (602) extends through the opening (110); and
shaping (408), in particular hot caulking, the blank fastening portion (602) to produce the at least one region (206) of the fastening portion (204) in the diameter enlargement (112).

## Revendications

1. Membrane de valve (100) comprenant:
une région de bord (102) disposée sur le côté étroit, dans laquelle un évidement (108) de la région de bord (102) comprend un élargissement de diamètre (112) à partir d'une ouverture (110) de l'évidement (108); et
un corps en matière plastique (200) comprenant un transpondeur (202) et dont la section de fixation (204) fait saillie à travers l'ouverture (110), **caractérisée par le fait que** la section de fixation (204) remplit au moins en partie l'élargissement de diamètre (112) par une déformation d'au moins une région (206) de la section de fixation (204), qui se produit dans l'élargissement de diamètre (112) de l'évidement (108).

2. Membrane de valve (100) selon la revendication 1, dans laquelle l'évidement (108) est un passage s'étendant en particulier perpendiculairement à un plan de membrane (xy) et comprend une autre ouverture (120), et dans laquelle le corps en matière plastique (200) ne dépasse pas sensiblement de l'autre ouverture (120) ou le corps en matière plastique (200) se termine à l'intérieur de l'autre ouverture (120).

3. Membrane de valve (100) selon l'une quelconque des revendications précédentes, dans laquelle l'évidement (108) est un passage s'étendant en particulier perpendiculairement au plan de membrane (xy) et comprend une autre ouverture (120), et dans laquelle une surface (122) de la région de bord (102) de la membrane de valve (100), qui entoure l'autre ouverture (120), ainsi qu'une surface (222) du corps en matière plastique (200) sont pour l'essentiel au même niveau.

4. Membrane de valve (100) selon l'une quelconque des revendications précédentes, dans laquelle une tête (230) du corps en matière plastique (200), qui est disposée à l'extérieur de l'évidement (108), comprend une section d'appui (232) montrant vers l'élargissement de diamètre (112) et reposant contre une surface d'appui (132) de la région de bord (132).

5. Membrane de valve (100) selon la revendication précédente, dans laquelle la section d'appui (232) de la tête (230) et la région (206) de la section de fixation (204), remplissant au moins en partie l'élargissement de diamètre (112) fixe à engagement positif le corps en matière plastique (200) par rapport à la région de bord (102).

6. Membrane de valve (100) selon la revendication 4 ou 5, dans laquelle la tête (230) comprend, en particulier intègre, le transpondeur (202).

7. Membrane de valve (100) selon l'une quelconque des revendications 4 à 6, dans laquelle la surface d'appui (132) de la région de bord (132) est en retrait par rapport à une surface environnante (134) de la région de bord (102).

8. Membrane de valve (100) selon l'une quelconque des revendications précédentes, dans laquelle un contour extérieur à côté étroit (234) de la tête (230) suit une surface latérale cylindrique imaginaire au moins dans la direction proximale et au moins par sections.

9. Membrane de valve (100) selon l'une quelconque des revendications précédentes, dans laquelle un corps principal (104) de la membrane de valve (100) est fabriqué à partir d'un polytétrafluoroéthylène ou d'un polyfluorure de vinylidène.

10. Membrane de valve (100) selon l'une quelconque des revendications précédentes, dans laquelle le corps en matière plastique (200), en particulier son corps principal, est fabriqué à partir de polyamide, de polybutylène téréphtalate, de polycarbonate, de polyéther cétone, de polyoxyméthylène ou de polypropylène.

11. Membrane de valve (10) selon l'une quelconque des revendications précédentes, dans laquelle la région de bord (102) disposée sur le côté étroit est une languette faisant saillie au-delà d'une zone fonctionnelle (106) de la membrane de valve (100).

12. Membrane de valve (100) selon l'une quelconque des revendications précédentes, dans laquelle la section de fixation (204) remplit au moins en partie l'élargissement de diamètre (112) par un calfeutrage à chaud de ladite au moins une région (206) de la section de fixation (204), qui se produit dans l'élargissement de diamètre (112) de l'évidement (108).

13. Procédé de fabrication de la membrane de valve (100) selon l'une quelconque des revendications précédentes, le procédé comprenant:
fabriquer (402) le corps principal (104) de la membrane de valve (100), dans lequel l'élargissement de diamètre (112) est conçu dans le corps principal (104) en tant que trou borgne ayant un diamètre intérieur qui diminue au moins par sections vers le fond du trou borgne;
ménager (404), en particulier poinçonner, un passage (154) au niveau de l'élargissement de diamètre (112) pour former l'évidement (108);
disposer (406) une section de fixation d'ébauche (690) d'une ébauche de corps en matière plastique (600) au niveau de l'élargissement de diamètre (112), dans lequel la section de fixation (602) est menée à travers l'ouverture (110); et
former (408), en particulier calfeutrer à chaud, la section de fixation d'ébauche (602) pour réaliser ladite au moins une région (206) de la section de fixation (204) dans l'élargissement de diamètre (112).
